# EUROPEAN PATENT APPLICATION

(11) **EP 2 390 169 A1**
(43) Date of publication of application: **30.11.2011**
(21) Application number: 11167520.3
(22) Date of filing: 25.05.2011
(51) Int. Cl.: B62H 1/02

(54) **Kick stand for a bicycle**

(30) Priority: 25.05.2010 NL 2004763
(71) Applicant: Koninklijke Gazelle B.V., 6951 BP Dieren (NL)
(72) Inventor: Alagourie, Ghassan, 6826 LN, Arnhem (NL); Heida, Jan, 7006 SB, Doetinchem (NL)
(74) Representative: De Vries & Metman

(57) **Abstract**

The invention relates to a bicycle comprising a frame (2) and a kick stand (9), the kick stand (9) in turn comprising a mount (10) attached to the bottom side of the frame (2) and a prop (11) connected to the mount (10) by means of a pivot (12), wherein the prop (11) is pivotable between at least a retracted position and an extended position for supporting the bicycle (1) in a standing position. In the retracted position, at least a substantial part of the prop (11) extends at least substantially parallel to and at the same height as the chain stay (3) of the frame (2) or above the chain stay (3).

## Description

The invention relates to bicycle comprising a frame and a kick stand, the kick stand in turn comprising a mount attached to the bottom side of the frame, e.g. to the chain stays or the bottom bracket shell, i.e. in front of the rear wheel, and a prop connected to the mount by means of a pivot, wherein the prop is pivotable between at least a retracted position and an extended position for supporting the bicycle in a standing position. The invention further relates to a kick stand as such.

Kick stands are generally known in the art. A typical kick stand is known from, e.g. US 2,587,790. This stand includes an arm (numeral 10 in the drawings of US 2,587,790) pivotally connected to a socket or bracket (11) on a shaft (12), and a clamp (13) by which the bracket is fixedly mounted on a frame (14) of a bicycle (15) by a bolt (16). When it is desired to support the bicycle with the stand the arm (10) is moved downwardly and during this movement a pin (20) is snapped over the center of the shaft (12) and a spring (22) positively holds the arm in this position. By this means the supporting arm (10) is positively held in both the operative (extended) and inoperative (retracted) positions.

DE 20 2009 002 538 discloses a more contemporary version of a kick stand, comprising a mount (numeral 1) and a pivotable prop (2). Other examples are known from, e.g., NL 1032207 and EP 409 352.

It is an object of the present invention to provide a bicycle comprising a kick stand that is mounted, preferably releasably mounted to the frame of the bicycle by means of a standardized or generally used mount and that is less conspicuous in the retracted position.

To this end, the bicycle according to the present invention is characterized in that, in the retracted position of the kick stand, at least a substantial part of the prop extends at least substantially parallel to and at the same height as the corresponding chain stay or above the chain stay.

In an embodiment, the prop comprises a transitional section between the mount and said part of the prop, which section, in the retracted position, extends upwards from the mount. Examples of such transitional sections include a bend or angles. In a further embodiment, the stand comprises a resilient element or mechanism for locking the prop in the extended and retracted positions, which element or mechanism is integrated in or extends along the prop.

Thus, seen from the (usually left-hand) side, the prop at least partially coincides with the corresponding chain stay providing, depending on the type of bicycle, e.g. a more streamlined or integrated ('clean') appearance. Also, in bicycles comprising a guide, e.g. integrated in reduced height chain guard, to raise the lower part of the chain returning to the rear wheel, the retracted kick stand will not or hardly be visible from the other (usually right-hand) side of the bicycle.

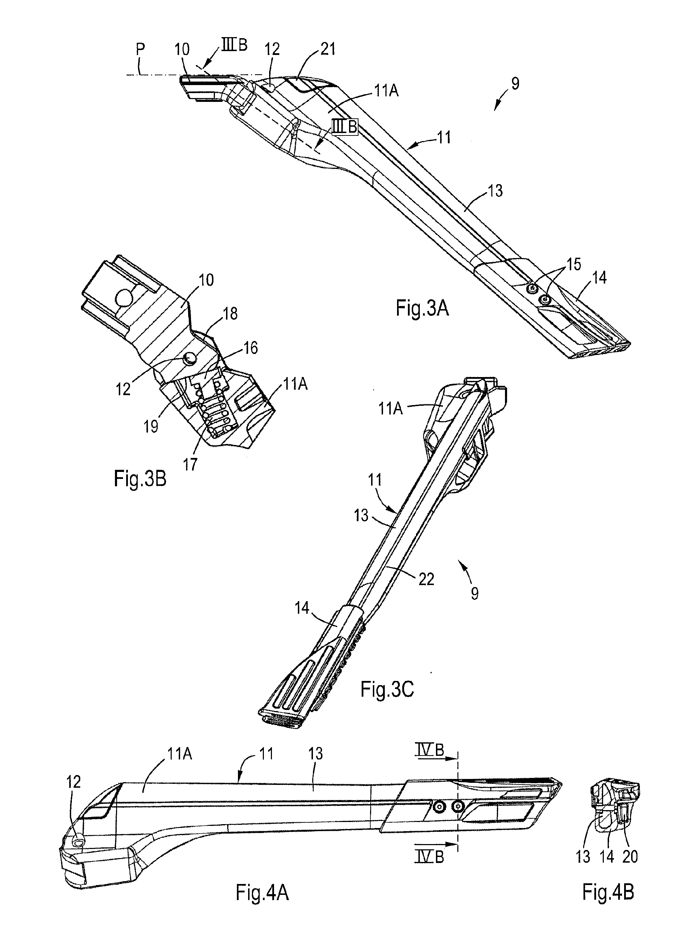

If the axis of the pivot extends at an angle larger than 45°, preferably larger than 50°, with a horizontal plane, i.e. a plane parallel to the ground (denoted "P" in Figure 3A), such appearance is further facilitated and stability in the extended position is improved.

The invention also relates to a kick stand as such. The kick stand comprises a mount for attaching the stand to the bottom side of a bicycle frame, the mount defining an imaginary plane ("P" in Figure 3A) which, when the stand is mounted on a bicycle, extends parallel to the bottom side of the bicycle. The kick stand further comprises a prop connected to the mount by means of a pivot, the prop being pivotable between a retracted position and at least an extended position for supporting the bicycle in standing position when at rest. In accordance with the present invention, in the retracted position, the prop extends through said imaginary plane ("P"). Thus, if the kick stand is mounted to a bicycle in a standardized or generally used way, the prop, in the retracted position, at least partially coincides with the chain stay providing, depending on the type of bicycle e.g. a more streamlined or integrated ('clean') appearance.

In an embodiment, the prop comprises a transitional section between the mount and the part of the prop extending beyond said plane, which section, in the retracted position, extends through said imaginary plane.

In a further embodiment, the kick stand comprises a resilient element or mechanism for locking the prop in the extended and retracted positions, which resilient element or mechanism is integrated in or extends along the prop.

Attention is drawn to US 2,434,423. This patent publication discloses a kick stand including a tubular housing (numeral 5 in the drawings of US 2,434,423) which is formed as an integral part of the frame (2) and extends horizontally therethrough in axial intersecting relation. "By this it is meant that the longitudinal axis of the tubular member 2 and the longitudinal axis of tubular housing 5 will intersect and will both lie in the same horizontal plane common to both of said tubular members. This means further that said tubular members 2 and 5 are symmetrically disposed above and below said plane, and thus contribute toward a pleasing appearance for said assembly." The kick stand comprises a prop leg (11) which may be positioned horizontally and substantially parallel to the rear fork member (3). A similar stand is known from US 2, 657, 941.

US 2,912,255 relates to a simple form of kick stand adapted to be integrally secured to the lower rear fork tubes (chain stay) of a bicycle frame. The stand comprises a prop member extending below the chain stay.

The invention will now be explained in more detail with reference to the drawings, which show a preferred embodiment of the present invention.
Figures 1A and 1B are side and front views of a bicycle according to the present invention, with the kick stand in the extended position.
Figure 2 is a side view of the bicycle shown in Figures 1A and 1B, with the kick stand in the retracted position.
Figures 3A to 3C are front, cross-sectional, and side views, respectively, of a kick stand according to the present invention, in the extended position.
Figures 4A and 4B are side and cross-sectional views, respectively, of the kick stand shown in Figures 3A to 3C, but in the retracted position.

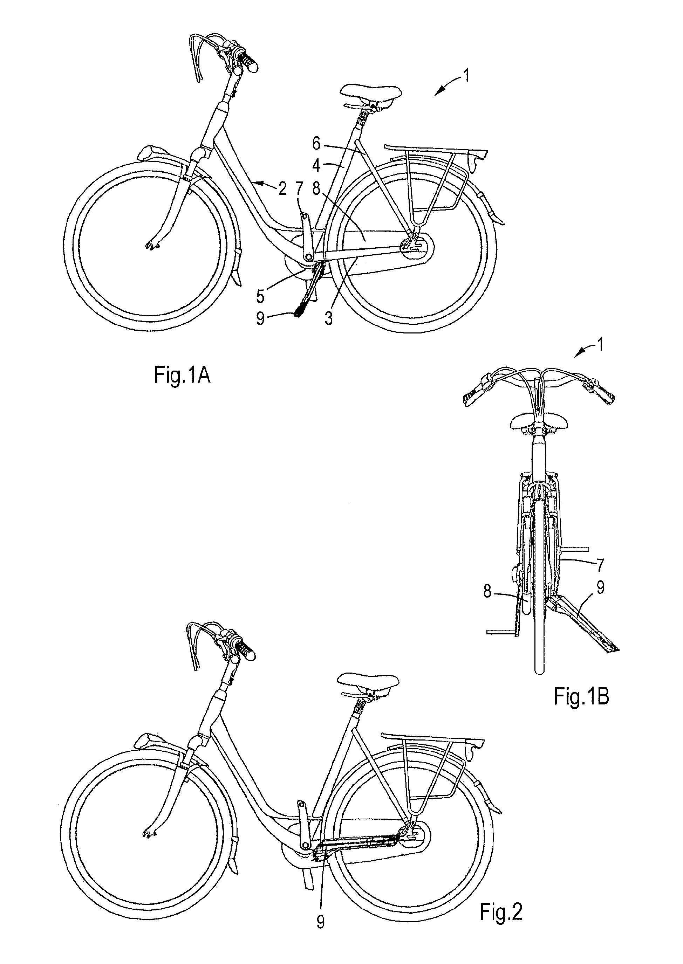

Figures 1A, 1B, and 2 show a bicycle 1 comprising a frame 2, in turn comprising chain stays 3, a seat tube 4, a bottom bracket shell 5, and, in this example, seat stays 6. The bicycle 1 further comprises various other common components, such as cranks 7 and a chain guard 8. A kick stand 9 comprising a mount 10 (Figures 3A to 3C) is releasably attached to the bottom side of the frame 2, e.g. bolted to a standard plate which welded to or forms an integral part of the frame 2. In another embodiment, the kick stand 9 is mounted to a standard plate via an adaptor.

As shown in more detail in Figures 3A to 4B, the kick stand 9 further comprises a prop 11 connected to the mount 10 by means of a pivot 12, such that the prop 11 is pivotable between at least a retracted position (Figures 2 and 4A) and an extended position (Figures 1A, 1B, 3A, and 3C) for supporting the bicycle 1 in standing position when at rest. The prop 11 comprises two telescopic parts, a main part 13 and a foot 14, thus allowing adjusting the length of the prop 11, e.g. by loosening bolts 15, sliding the foot 14 to the desired length, and tightening the bolts 15.

The prop 11 further comprises a transitional section 11A between the mount 10 and the main part 13 of the prop 11, which section 11A, when the kick stand 9 is in the retracted position, extends upwards such that the prop 11 extends parallel to and at the same height as the chain stay 3.

A resilient element or mechanism is integrated in the prop 11, near the pivot 12. In this example, the prop 11 accommodates a spring mechanism which comprises a locking element 16 having a flat end face and a helical spring 17 urging the locking element 16 towards the mount 10. The mount 10 in turn comprises two flat locking surfaces 18, 19, which effectively define the farthest retracted and extended positions of the prop 11. In general, to provide sufficient stability, it is preferred that the retracted and extended positions of the prop span more than 100°, preferably more than 110°.

In this example, when the prop 11 is pushed or 'kicked' from one position to the other, the locking element 16 is urged inwards against the action of the spring 17, slides away from one flat end surface 18, 19 over the transitional surface or apex between the flat locking surfaces 18, 19, and, once past the transitional surface or apex, is urged outwards again to abut the other flat end face 19, 18 and locks the prop 11 in the new position.

In the extended position the prop 11 is maintained in place primarily by the ground and the weight of the bicycle 1. In the retracted position, the prop 11 is maintained in place by the resilient mechanism 16-19 and the chain stay 3, i.e. the prop 11 at or near its end abuts the chain stay 3.

At least where the prop 11 abuts the chain stay 3, the prop 11 and/or the chain stay 3 is provided with a cushioning element 20. Also, the kick stand according to the present invention can be provided with a means to slow down upward movement of the prop, especially the last few centimetres of the upward movement just before the prop contacts the chain stay.

Further optional features include a crank bumper 21 on top of the transitional section 11A of the prop 11 to protect the prop 11 and the left crank 7 from damage when these parts accidentally hit each other. Also, it is preferred that the prop 11 has a longitudinal recess 22 for accommodating the left chain stay 3.

The mount and the main part of the prop are made of an injection moulded metal, such as aluminium, the foot and the crank bumper are made of an injection moulded synthetic material, e.g. a plastic, or rubber.

As illustrated in Figure 2, in the retracted position, the prop coincides with the chain stay providing a more streamlined appearance.

The invention is not restricted to the above-described embodiments, which can be varied in a number of ways within the scope of the claims.

## Claims

1. Bicycle (1) comprising a frame (2) and a kick stand (9), the kick stand (9) in turn comprising a mount (10) attached to the bottom side of the frame (2) and a prop (11) connected to the mount (10) by means of a pivot (12), wherein the prop (11) is pivotable between at least a retracted position and an extended position for supporting the bicycle (1) in a standing position, **characterised in that**, in the retracted position, at least a substantial part of the prop (11) extends at least substantially parallel to and at the same height as the chain stay (3) of the frame (2) or above the chain stay (3).

2. Bicycle (1) according to claim 1, wherein the prop (11) comprises a transitional section (11A) between the mount (10) and said part of the prop (11), which section (11A), in the retracted position, extends upwards from the mount.

3. Bicycle (1) according to claim 1 or 2, comprising a resilient element or mechanism (16-19) for locking the prop (11) in the extended and retracted positions, which element or mechanism (16-19) is integrated in or extends along the prop (11).

4. Bicycle (1) according to any one of the preceding claims, wherein the axis of the pivot (12) extends at an angle larger than 45°, preferably larger than 50°.

5. Bicycle (1) according to any one of the preceding claims, wherein the retracted and extended positions of the prop (11) span more than 100°, preferably more than 110°.

6. Bicycle (1) according to any one of the preceding claims, wherein, in the retracted position, the prop (11) abuts the chain stay (3).

7. Bicycle (1) according to claim 6, wherein, at least where the prop (11) abuts the chain stay (3), the prop (11) and/or the chain stay (3) is provided with a cushioning element (20).

8. Bicycle (1) according to claim 6 or 7, wherein the prop (11) has a longitudinal recess (22) for accommodating a chain stay (3).

9. Bicycle (1) according to any one of the preceding claims, wherein the mount (10) is releasably attached, e.g. bolted, to the frame (2).

10. Kick stand (9) for a bicycle (1) comprising a mount (10) for attaching the stand (9) to the bottom side of a bicycle frame (2), the mount (10) defining an imaginary plane (P) which, when the stand (9) is mounted on a bicycle (1), extends parallel to the bottom side of the bicycle (1), and a prop (11) connected to the mount (10) by means of a pivot (12), wherein the prop (11) is pivotable between a retracted position and at least an extended position for supporting the bicycle (1) in a standing position when at rest, **characterised in that**, in the retracted position, the prop (11) extends through said imaginary plane (P).

11. Kick stand (9) according to claim 10, wherein the prop (11) comprises a transitional section (11A) between the mount (10) and the part of the prop (11) extending beyond said plane (P), which section (11A), in the retracted position, extends through said imaginary plane (P).

12. Kick stand (9) according to claim 10 or 11, comprising a resilient element or mechanism (9-16) for locking the prop (11) in the extended and retracted positions, which element or mechanism (9-16) is integrated in or extends along the prop (11).

13. Kick stand (9) according to any one of the claims 10-12, wherein the axis of the pivot (12) extends at an angle with the imaginary plane (P) which angle is larger than 45°, preferably larger than 50°.

14. Kick stand (9) according to any one of the claims 10-13, wherein the retracted and extended positions of the prop (11) span more than 100°, preferably more than 110°.

15. Kick stand (9) according to any one of the claims 10-14, wherein the prop (11) has a longitudinal recess (22) for accommodating a chain stay (3).
